# EUROPÄISCHE PATENTSCHRIFT

(11) **EP 2 827 453 B1**
(45) Veröffentlichungstag und Bekanntmachung des Hinweises auf die Patenterteilung: **31.10.2018**
(21) Anmeldenummer: 14177002.4
(22) Anmeldetag: 15.07.2014
(51) Int. Cl.: H01R 9/24, H01R 13/447, H01R 13/502, H01R 13/514, H01R 13/6593, H02G 3/08

(54) **Elektronikvorrichtungen-Gehäuse**
Housing of an electronic device
Boîtier de dispositif électronique

(30) Priorität: 16.07.2013 ES 201300672
(43) Veröffentlichungstag der Anmeldung: 21.01.2015
(73) Patentinhaber: Televés, S.A., 15706 Santiago de Compostela (ES)
(72) Erfinder: Lago Rama, Manuel, 15706 Santiago de Compostela (ES)

(56) Entgegenhaltungen:
- EP-A1- 1 389 811
- EP-A2- 0 865 110
- EP-A2- 1 337 021
- WO-A1-97/23926
- DE-A1-102009 053 183
- FR-A1- 2 742 004
- GB-A- 1 601 461
- US-A- 5 295 870

## Beschreibung

Die vorliegende Erfindung betrifft ein Elektronikvorrichtungen-Gehäuse nach dem Oberbegriff des Anspruchs 1.

Gegenwärtig gibt es eine Vielzahl unterschiedlicher Gehäuse für Elektronikvorrichtungen, die unter anderem aus US 5,295,870 A, EP 1 337 021 A2, GB 1 601 461 A, DE 10 2009 053183 A1, EP 1 389 811 A1 und FR 2 742 004 A1 bekannt sind.

Aus WO 97/23926 ist eine Anordnung "Shielded electrical connector with cable strain relief" bekannt. Die bekannte Anordnung weist eine erste Komponente "first shell (20)" auf, die ein langgestrecktes Gehäuse für elektrische Kabel darstellt. Auf die erste Komponente (20) ist eine zweite Komponente (34) aufsteckbar.

Aus EP 0 865 110 A2 ist eine Anschlussvorrichtung bekannt, die mindestens ein Steckergehäuse (SG) aufweist. Das Steckergehäuse (SG) weist zwei ausbrechbare Öffnungen O für Kabelverschraubungen auf, die je nach Bedarf zu öffnen sind.

Die bekannten Gehäuse für Elektronikvorrichtungen entsprechen unterschiedlichen Charakteristika hinsichtlich der Funktion der Elektronikvorrichtungen, die in die Innenräume der Gehäuse aufzunehmen sind. Die wichtigsten Charakteristika sind die Form und die Größe des Gehäuses.

In vielen Fällen betreffen die Unterschiede bei den Gehäusen ausschließlich Fragen der Größe der aufzunehmenden Elektronikvorrichtung, was dazu führt, dass verschiedene Gehäuse unterschiedlicher Größe vorzusehen sind. Entsprechend der Verbreitung der Elektronikvorrichtungen und der Unterschiede in ihrer Größe sind zahlreiche Modelle für Gehäuse vorzusehen, wobei nur die Dimensionen unterschiedlich gewählt werden. Damit ergeben sich Nachteile hinsichtlich der Fertigung und der Lagerung dieser Modelle.

Ausgehend von diesem Stand der Technik liegt der Erfindung die Aufgabe zugrunde, ein Elektronikvorrichtungen-Gehäuse zu schaffen, das hinsichtlich seiner Größe veränderbar ist, so dass ein einziges Gehäusemodell unterschiedlich gewünschte Größen abdeckt.

Diese Aufgabe wird durch ein Elektronikvorrichtungen-Gehäuse gelöst, das in den Ansprüchen definiert ist.

Das Gehäuse gemäß der Erfindung zeichnet sich durch eine Vielzahl von Vorteilen aus.

Eine Ausführungsform des Gehäuses, bestehend aus einer Schale und einer Abdeckung, ist dadurch gekennzeichnet, dass die Schale aus einem ersten Teil und aus einem zweiten Teil, oder aus einem ersten Teil, einem zweiten Teil und wenigstens einem dritten Teil besteht, und dass diese Teile miteinander verbunden sind und im verbundenen Zustand die Schale bilden. Das erste Teil und das zweite Teil bestehen jeweils aus einer Bodenplatte und aus drei Seitenwänden; während das wenigstens eine dritte Teil aus einer Bodenplatte und aus zwei seitlichen Wänden besteht, die sich gegenüberstehen.

Damit wird der Vorteil erzielt, dass ein Gehäuse mittels der Verbindung verschiedener Teile gebildet wird, wodurch verschiedene Gehäusegrößen gebildet werden, dies in Abhängigkeit der Anzahl dritter Teile, die zwischen ein erstes (Schalen-)Teil und ein zweites (Schalen-)Teil eingefügt und mit diesen verbunden werden.

Die (Schalen-)Teile bilden Module, die miteinander verbunden werden.

Damit wird auch der Vorteil erzielt, dass ausgehend von derselben Bodenplatte und einer eingeschränkten Anzahl von Seitenwänden drei oder mehr einzelne Teile gebildet werden, die dazu dienen, Gehäuse in gewünschten Größen herzustellen, dies ohne irgendeine Einschränkung.

Bei einer weiteren vorteilhaften Ausführungsform des Gehäuses gemäß der Erfindung bilden das erste Teil und das zweite Teil Außen- bzw. Endbereiche der Schale und die dritten Teile bilden einen Innen- bzw. Zwischenbereich der Schale. Damit wird der Vorteil erzielt, dass die Gehäuse in einfacher Weise dadurch vergrößert werden, dass mehr dritte Teile verwendet werden, die miteinander verbunden werden und zwischen einem ersten Schalenteil und einem zweiten Schalenteil angeordnet werden, dies im Gegensatz zu Gehäusen kleinster Abmessungen, die lediglich aus einem ersten und einem zweiten Schalenteil bestehen. In vorteilhafter Weise sind wenigstens zwei dritte Teile einer Schale identisch.

Bei einer weiteren vorteilhaften Ausführungsform des Gehäuses gemäß der Erfindung wird die Verbindung zwischen dem ersten Schalenteil, dem zweiten Schalenteil und den dritten Schalenteilen durch Verbindungselemente hergestellt, die an dem ersten Schalenteil, an dem zweiten Schalenteil und am den dritten Schalenteilen angeordnet sind.

Damit wird der Vorteil erzielt, dass die Anzahl der Komponenten, die für die Bildung der Schale in ihrer definitiven Ausbaustufe erforderlich sind, gering ist, da die Verbindungselemente an den Schalenteilen angeordnet sind, und separate Verbindungselemente nicht verwendet werden.

Bei einer weiteren vorteilhaften Ausführungsform des Gehäuses gemäß der Erfindung bestehen die Verbindungselemente aus männlichen Elementen und aus weiblichen Elementen, wobei die männlichen Elemente und die weiblichen Elemente der Verbindungselemente korrespondierend zueinander ausgestaltet sind und insbesondere ineinander einrasten. Dabei bestehen die männlichen Elemente aus einer Wand und aus Zapfen, während die weiblichen Elemente aus einer Schiene und aus rohrförmigen Elementen bestehen.

Damit wird der Vorteil einer einfachen Montage der Schale erzielt, ausgehend von den verschiedenen Teilen, die sie bilden.

Bei einer weiteren vorteilhaften Ausführungsform des Gehäuses gemäß der Erfindung sind die Verbindungselemente in der Weise ausgestaltet, dass eine Verbindung der Verbindungselemente, insbesondere ihr Verriegeln bzw. Verrasten, durch eine Einführung der Wand des männlichen Elements in die Führungsschiene des weiblichen Elements und durch eine Einführung der Zapfens des männlichen Elements in die Rohrstücke des weiblichen Elements hergestellt wird.

Damit wird der Vorteil einer großen Robustheit beziehungsweise einer großen Stabilität des Gehäuses erzielt.

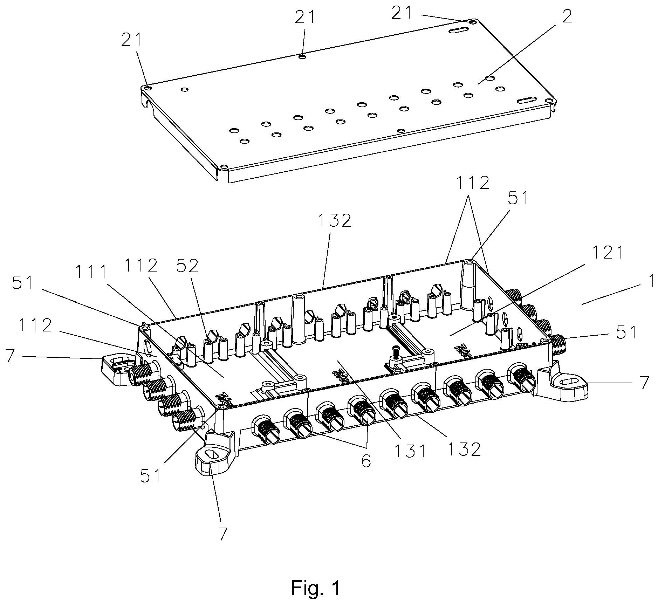

Bei einer weiteren vorteilhaften Ausführungsform des Gehäuses gemäß der Erfindung weisen die Bodenplatten des ersten, zweiten und dritten Teils an ihrer jeweiligen Kante, die in Richtung einer benachbarten Bodenplatte ausgerichtet ist, eine erste Linie, eine zweite Linie, und eine dritte Linie auf. Dabei ist die zweite Linie in einem Winkel von etwa 90° zu der ersten Linie angeordnet, während die dritte Linie in einem Winkel von etwa 90° zu der zweiten Linie angeordnet ist. Damit wird die Kontaktfläche zweier verbundener Teile, zum Beispiel 11 und 12, 11 und 13, sowie 13 und 12 vergrößert gegenüber einer Ausgestaltung mit nur einer Linie, die parallel zu einer Seitenwand der Schale (zum Beispiel linke und rechte Seitenwand der Schale in Figur 1) verlaufen würde. Eine solche - gerade durchgehende - Linie hätte lediglich die Länge, die bei der vorstehend genannten Ausführungsform die Länge der ersten und dritten Linie hätte. Demgegenüber ist die Kontaktfläche bei der vorstehend genannten Ausführungsform um die Länge der zweiten Linie verlängert. Mit der erfindungsgemäß verlängerten Kontaktfläche wird der Vorteil erzielt, dass der mechanische Kontakt zwischen den verbundenen Teilen beziehungsweise Modulen und damit die Stabilität der gesamten Anordnung verbessert wird.

Im Folgenden wird anhand der Zeichnung beispielhaft ein Gehäuse, insbesondere für Elektronikvorrichtungen, gemäß der Erfindung dargestellt

Es zeigt:
- Figur 1: ein Gehäuse gemäß der Erfindung;
- Figur 2: eine Ausführungsform der Teile, die eine Schale des Gehäuses gemäß der Erfindung bilden;
- Figur 3: eine mögliche Ausgestaltung der Teile, die eine Schale des Gehäuses gemäß der Erfindung bilden;
- Figur 4: eine Ausführungsform eines Verbindungselements, das verschiedene Teile verbindet, die eine Schale des Gehäuses gemäß der Erfindung bilden;
- Figur 5: eine Ausführungsform der Verbindungselemente der Teile, die eine Schale des Gehäuses gemäß der Erfindung bilden;
- Figur 6: ein Ausführungsbeispiel der männlichen Elemente und der weiblichen Elemente der Verbindungselemente der diversen Teile der Schale des Gehäuses gemäß der Erfindung;
- Figur 7 und 8: Ausgestaltungen der Verbindungselemente nach Figur 6.

Figur 1 zeigt eine Sicht auf eine Ausführungsform des Gehäuses gemäß der Erfindung. Wie klar zu ersehen ist, besteht das Gehäuse aus einer Abdeckung 2 und aus einer Schale 1.

Die Schale 1 besteht aus Bodenplatten 111, 121, 131 und aus Seitenwänden 112, 132. Die Seitenwände 112, 132 verfügen über Verbindungssteckelemente 6, durch welche mindestens eine elektrische Verbindung mit (in der Figur nicht dargestellten) Elektronikvorrichtungen, die in dem Gehäuse gelagert werden, hergestellt wird.

Die Abdeckung 2 verfügt über Durchgangsöffnungen 21, durch welche Schrauben geführt werden. Diese Schrauben werden mit im Inneren der Schale 1 angeordneten Zapfen 51 verschraubt, die ein Schraubgewinde aufweisen, womit der Verschluss des Gehäuses hergestellt wird. Die Schale verfügt weiterhin in ihrem Inneren über Zapfen 52 mit einem Schraubgewinde, an das beispielsweise mittels Schrauben die Elektronikvorrichtungen befestigt werden. Außen verfügt die Schale über perforierte Laschen 7 für ihre Befestigung an einer Wand oder an einer anderen Oberfläche.

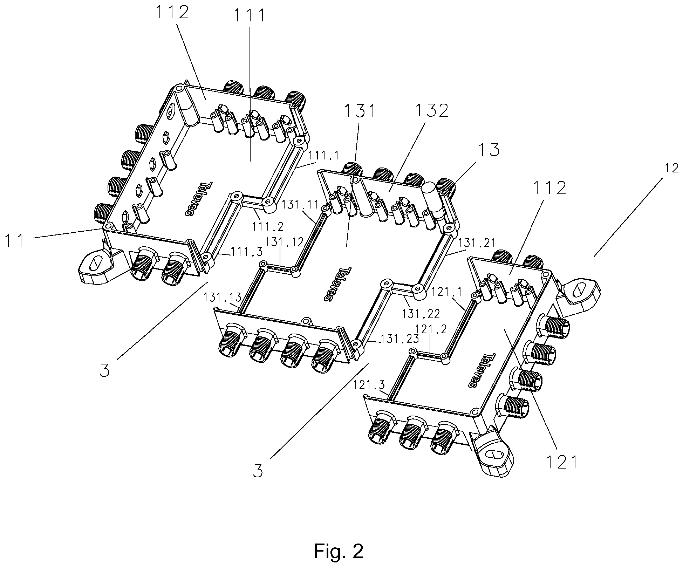

Figur 2 zeigt die Teile, aus denen die Schale des Gehäuses gemäß der Erfindung besteht. Wie aus der Figur 2 zu ersehen ist, besteht die Schale 1 aus einem ersten (Schalen-)Teil 11 und aus einem zweiten (Schalen-)Teil 12, oder aus einem ersten (Schalen-)Teil 11 und aus einem zweiten (Schalen-)Teil 12 und wenigstens aus einem dritten (Schalen-)Teil 13, wobei die (Schalen-)Teile durch Verbindungselemente 3 miteinander verbunden werden, um die Schale zu bilden. Diese Teile 11, 12 und 13 sind in der Weise ausgestaltet, dass sie zusammenpassen, insbesondere miteinander verriegeln beziehungsweise in einander einrasten. Neben beziehungsweise anstelle jeweils einer Rastverbindung können auch andere Verbindungen, beispielsweise Schraubverbindungen, verwendet werden.

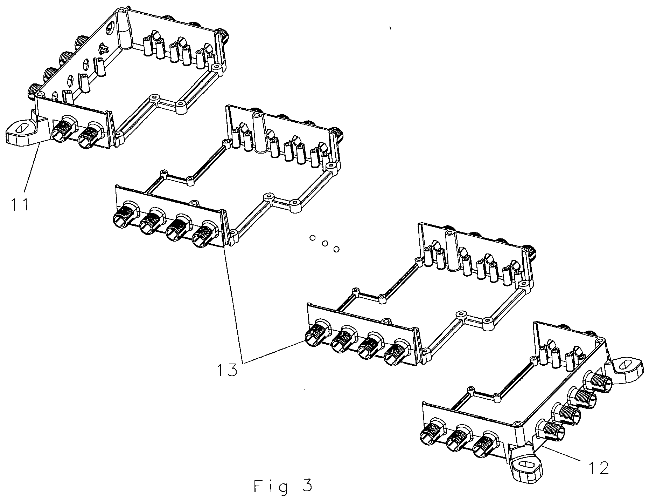

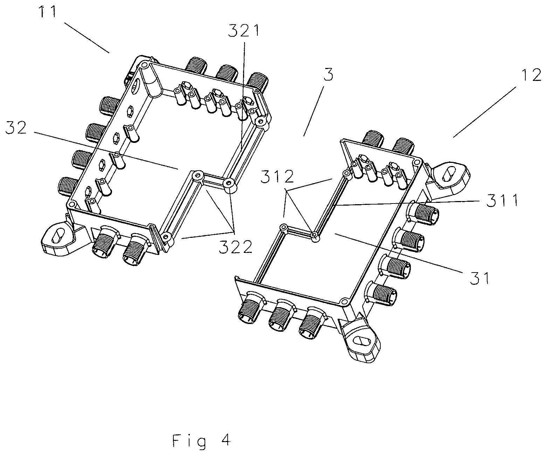

Das erste Teil 11 und das zweite Teil 12 weisen jeweils eine Bodenplatte 111, 121 und drei Seitenwände 112 auf, die rechtwinklig zueinander angeordnet sind. Ein drittes Teil 13 weist eine Bodenplatte 131 und zwei Wände 132 auf, die parallel zueinander angeordnet sind und sich gegenüberstehen. Das erste Teil 11 und das zweite Teil 12 bilden die beiden Außen- beziehungsweise die Endbereiche der Schale 1 des Gehäuses, während das dritte Teil 13 einen Innen- beziehungsweise Zwischenbereich der Schale 1 bildet. Wie aus den Figuren 2, 3 und 4 zu ersehen ist, kann die Schale 1 des Gehäuses nur aus einem ersten Teil 11 und einem zweiten Teil 12 bestehen (siehe Figur 4), womit eine Schale kleiner Abmessung gebildet wird, oder sie kann aus einem ersten Teil 11, genau einem dritten Teil 13 und einem zweiten Teil 12 bestehen (siehe Figur 2), womit eine Schale größerer Abmessungen gebildet wird. Schalen noch größerer Abmessungen werden durch die Hinzunahme weiterer dritter Teile 13 gebildet, wie aus Figur 3 ohne weiteres zu entnehmen ist. Die Anzahl dritter Teile 13 kann also variiert werden, um Schalen unterschiedlicher Abmessungen zu bilden. Die Teile 11, 12, 13 sind Module, die in unterschiedlicher Kombination hinsichtlich der Anzahl der Teile 13 miteinander verbindbar sind.

Mit diesen unterschiedlichen Modellen der Schale und einer entsprechenden Abdeckung 2 werden unterschiedliche Gehäuse unterschiedlicher Größe geschaffen, dies in einfacher Weise und leichter Realsierung, wobei zusätzlich noch die Möglichkeit geschaffen wird, später die Abmessungen des Gehäuses je nach Bedarf zu verändern.

Wie weiterhin in Figur 2 dargestellt ist, weisen die Bodenplatten 111, 121,131 des ersten, zweiten und dritten Teils 11, 12, 13 an ihrer jeweiligen Kante, die in Richtung einer benachbarten Bodenplatte 13, 11, 12 ausgerichtet ist, eine erste Linie 111.1; 131.11, 131.21, 121.1 eine zweite Linie 111.2; 131.12, 131.22, 121.2 und eine dritte Linie 111.3; 131.13, 131.23, 121.3 auf. Dabei ist die zweite Linie 111.2; 131.12, 131.22; 121.2 in einem Winkel von etwa 90° zu der ersten Linie 111.1; 131.11, 131.21; 121.1 angeordnet, und die dritte Linie 111.3; 131.13, 131.23, 121.3 ist in einem Winkel von etwa 90° zu der zweiten Linie 111.2; 131.12, 131.22; 121.2 angeordnet. Auf diese Ausgestaltung der Kanten ist die Erfindung nicht eingeschränkt.

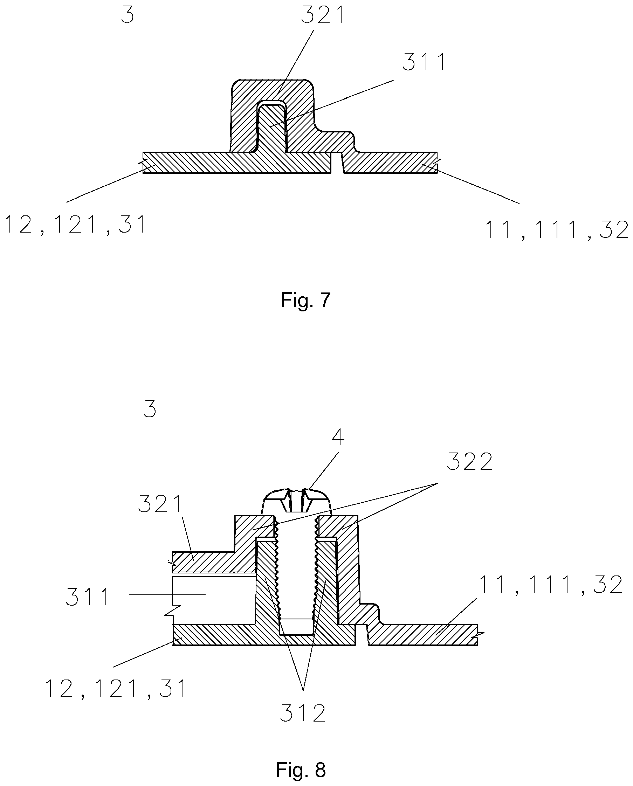

Figur 4 zeigt ein Ausführungsbeispiel eines Verbindungselements 3 für die Verbindung beispielsweise eines ersten Teils 11 und eines zweiten Teils 12 zur Bildung einer Schale 1. Dieses Ausführungsbeispiel ist auf beliebige Anordnungen bzw. Verbindungen zwischen den verschiedenen Teilen 11, 12, 13 anwendbar. Wie aus Figur 4 zu ersehen ist, sind die hier verwendeten Verbindungselemente 3 aus männlichen Elementen 31 und weiblichen Elementen 32 gebildet, die an dem ersten Teil 11 bzw. an dem zweiten Teil 12 angeordnet sind. Die männlichen Elemente 31 bestehen aus einer (Zwischen-)Wand 311 und aus Zapfen 312 und die weiblichen Elemente bestehen aus einer Leit- beziehungsweise Führungsschiene 321 und aus rohrförmigen Elementen (Rohrstücken) 322. Die Verbindung zwischen dem ersten Teil11, gegebenenfalls einem dritten Teil 13, beziehungsweise. mehreren dritten Teilen 13 und dem zweiten Teil 12 wird hergestellt, indem die Zwischenwände 311 in die Schiene 321 eingeführt werden, und indem die Zapfen 312 in die rohrförmigen Elemente 322 eingeführt werden und schließlich durch Befestigen der gesamten Anordnung zum Beispiel mittels Schrauben (4 in Figur 8).

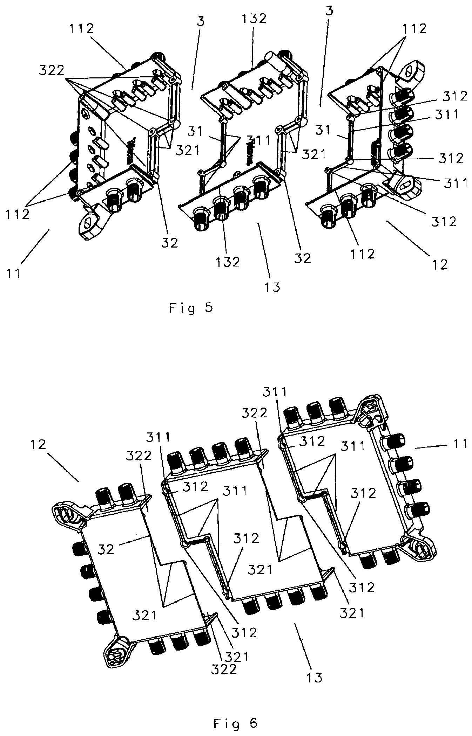

Figur 5 zeigt ein Ausführungsbeispiel der Verbindungselemente im ersten Teil 11, im zweiten Teil 12 und im dritten Teil 13. Wie aus Figur 5 zu ersehen ist, besteht das Verbindungsteil im ersten Teil 11 aus einem weiblichen Element 32, wobei das Verbindungselement 3 im zweiten Teil 12 aus einem männlichen Teil
31 besteht. In beiden Fällen befindet sich das Verbindungselement 3 an einer freien Seite der Wände 112.

Die dritten Teile 13 weisen auf ihren gegenüberliegenden Seiten freie Wände 132 auf, und Verbindungselemente 3, die aus einem weiblichen Element 32 an einer Seite und aus einem männlichen Teil 31 an der entgegengesetzten Seite bestehen.

Diese Ausgestaltung und Anordnung der Verbindungselemente ermöglicht die Verbindung zwischen dem ersten Teil 11 und dem zweiten Teil 12, um eine vorbestimmte Schale 1 eines vorbestimmten Gehäuses zu bilden.

Ebenso ermöglicht diese Ausgestaltung und Anordnung der Verbindungselemente die gleichzeitige Verbindung des ersten Teils 11 mit dem dritten Teil 13 und desselben dritten Teils 13 mit dem zweiten Teil 12, um eine vorbestimmte Schale 1 eines vorbestimmten Gehäuses zu bilden.

Schließlich ermöglicht die Ausgestaltung und Anordnung der Verbindungselemente 3 die Verbindung der dritten Teile 13 untereinander in der Weise, dass durch die Hinzunahme dritter Teile 13, die miteinander verbunden werden, eine Schale 1 gewünschter Größe gebildet wird.

Figur 6 zeigt eine rückwärtige Sicht der Teile 11,12 ,13, die die Schale 1 bilden, wo der Schlitz der Schienen 321 sowie die rohrförmig ausgestalteten Elemente (Rohrstücke) 322 der weiblichen Elemente 32 des Verbindungselements 3 zu ersehen sind. In diese Schienen 321 und rohrförmigen Elemente 322 werden die Wände 311 und die Zapfen 312 der männlichen Elemente 31 eingeführt, die wie auch die weiblichen Elemente 32 die Verbindungselemente 3 bilden.

Die Figuren 7 und 8 zeigen, wie die Verbindungselemente 3 das erste Teil 11, das zweite Teil 12 und das dritte Teil 13 miteinander verbinden.

Die Figur 7 zeigt ein Ausführungsbeispiel für eine Verbindung des ersten Teils 11 mit dem zweiten Teil 12. Diese Verbindung erfolgt durch ein Einrasten (Keilverzinken) eines männlichen Elements 31 des zweiten Teils 12, das aus der Wand 311 besteht, mit einem weiblichen Element 32 des ersten Teils 11, welches aus der Schiene 321 besteht.

Wie der Figur 7 zu ersehen ist, wird das männliche Element 31, das aus der Wand 311 des zweiten Teils 12 besteht, in das weibliche Element 32 eingeführt, das aus der Schiene 321 des ersten Teils 11 besteht. Damit wird der Zusammenschluss (die Verbindung) des ersten Teils 11 mit dem zweiten Teil 12 hergestellt. Die Zwischenwand 311 erhebt sich auf der Bodenplatte 121 des zweiten Teils12. Ebenso ist die Schiene 321 an der Bodenplatte 111 des ersten Teils 11 angeordnet.

Die Figur 8 zeigt ein Exempel für eine Verbindung des ersten Teils 11 mit dem zweiten Teil 12. Diese Verbindung erfolgt durch ein Einrasten (Keilverzinken) eines männlichen Elements 31 des zweiten Teils 12, das aus dem Zapfen 312 besteht, mit einem weiblichen Elements 32 des ersten Teils 11, welches aus dem rohrförmigen Element (Rohrstück) 321 besteht.

Wie der Figur 8 zu ersehen ist, wird das männliche Element 31, das aus dem Zapfen 312 des zweiten Teils 12 besteht, in das weibliche Element 32 eingeführt, das aus dem rohrförmigen Element (Rohrstück) 322 des ersten Teils 11 besteht. Damit wird der Zusammenschluss (Union) des ersten Teils 11 mit dem zweiten Teil 12 hergestellt.

Der Zapfen 312 erhebt sich auf der Bodenplatte 121 des zweiten Teils 12 und wird an die Wand 311 angefügt. Ebenso ist das rohrförmige Element 322 an der Bodenplatte 111 des ersten Teils 11 angeordnet und wird in die Schiene 321 eingefügt. Die Befestigung der ersten Teile 11 mit den zweiten Teilen 12 (beziehungsweise in anderen Ausführungsformen mit den dritten Teilen 13) erfolgt mittels Befestigungsmitteln, insbesondere Schrauben 4, die in die Zapfen 312 über die rohrförmigen Elemente 322 eingeführt werden.

Das erste Schalenteil 11 verfügt über verschiedene rohrförmig ausgestaltete Elemente 322, die in die Schiene 321 eingefügt werden, während das zweite Schalenteil 12 über verschiedene Zapfen 312 verfügt, die in die Zwischenwand 311 eingefügt werden. Das dritte Schalenteil 13 verfügt über verschiedene Zapfen 312 und aus verschiedenen rohrförmig ausgestalteten Elementen 322, die in die Wand 311 beziehungsweise in die Schiene 312 eingefügt werden.

### Bezugszeichenliste

- 1: Schale
- 11: Erstes (Schalen-)Teil
- 111: Bodenplatte des ersten Teils 11
- 111.1: Erste Linie der Seitenkante von 111
- 111.2: Zweite Linie der Seitenkante von 111
- 111.3: Dritte Linie der Seitenkante von 111
- 112: Seitliche Wände des ersten bzw. des zweiten Teils
- 12: Zweites Teil
- 121: Bodenplatte des zweiten Teils 12
- 13: Drittes Teil
- 131: Bodenplatte der dritten Teile
- 131.11, 131.21: Erste Linie der ersten bzw. zweiten Seitenkante von 131
- 131.12, 131.22: Zweite Linie der ersten bzw. zweiten Seitenkante von 131
- 131.13, 131.23: Dritte Linie der ersten bzw. zweiten Seitenkante von 131
- 132: Seitliche Wände der dritten Teile
- 2: Abdeckplatte
- 21: Durchgangsöffnung
- 3: Verbindungselement
- 31: Männliches Verbindungselement
- 311: Wand, Zwischenwand
- 312: Zapfen, Bolzen
- 32: Weibliches Verbindungselement
- 321: Schiene, Leitschiene, Führungsstück, Führungsleiste, Führungslager, Führungssteg
- 322: Rohrstück, Rohr, rohrförmig ausgebildetes Element
- 4: Befestigungsmedium, Schraube
- 51, 52: Zapfen mit Schraubgewinde
- 6: Steckgehäuse für elektrische Verbindungen
- 7: Perforierte Laschen; mechanische Verbindungselemente mit einer Aufnahmeöffnung

## Patentansprüche

1. Elektronikvorrichtungen-Gehäuse, bestehend aus einer Schale (1) und einer Abdeckung (2)
**dadurch gekennzeichnet,**
- **dass** die Schale (1) aus einem ersten Teil (11) und aus einem zweiten Teil (12), oder aus einem ersten Teil (11), einem zweiten Teil (12) und wenigstens einem dritten Teil (13) besteht, und
- **dass** die Teile miteinander verbunden sind und im verbundenen Zustand die Schale (1) bilden,
- **dass** das erste Teil (11) und das zweite Teil (12) jeweils aus einer Bodenplatte (111, 121) und aus drei Seitenwänden (112) bestehen, und
- **dass** das wenigstens eine dritte Teil (13) aus einer Bodenplatte (131) und aus zwei seitlichen Wänden (132) besteht, die sich gegenüberstehen.

2. Gehäuse nach Anspruch 1, **dadurch gekennzeichnet,**
- **dass** das erste Teil (11) und das zweite Teil (12) Endbereiche der Schale (1) bilden und dass das wenigstens eine dritte Teil (13) einen Zwischenbereich der Schale (1) bildet.

3. Gehäuse nach einem der vorstehenden Ansprüche, **dadurch gekennzeichnet,**
- **dass** wenigstens zwei dritte Teile (13) identisch sind.

4. Gehäuse nach einem der vorstehenden Ansprüche, **dadurch gekennzeichnet,**
- **dass** Verbindungselemente (3) das erste Teil (11), das zweite Teil (12) und das wenigstens eine dritte Teil (13) zur Bildung der Schale (1) miteinander verbinden, und
- **dass** die Verbindungselemente (3) an dem ersten Teil (11), dem zweiten Teil (12) und auf dem wenigstens einen dritten Teil (13) angeordnet sind.

5. Gehäuse nach Anspruch 4, **dadurch gekennzeichnet,**
- **dass** die Verbindungselemente (3) aus männlichen Elementen (31) und aus weiblichen Elementen (32) bestehen, und
- **dass** die männlichen Elemente (31) und die weiblichen Elemente (32) der Verbindungselemente (3) korrespondierend zueinander ausgestaltet sind und insbesondere Rastelemente sind, die ineinander einrasten.

6. Gehäuse nach Anspruch 5, **dadurch gekennzeichnet,**
- **dass** die männlichen Elemente (31) aus einer Wand (311) und aus Zapfen (312) bestehen.

7. Gehäuse nach Anspruch 5 oder 6, **dadurch gekennzeichnet,**
- **dass** die weiblichen Elemente (32) aus einer Schiene (321) und aus rohrförmigen Elementen (322) bestehen.

8. Gehäuse nach Anspruch 6 und 7, **dadurch gekennzeichnet,**
- **dass** die Verbindungselemente (3) in der Weise ausgestaltet sind, dass eine Verbindung der Verbindungselemente (3), insbesondere ihr Verrasten, durch eine Einführung der Wand (311) des männlichen Elements (31) in die Schiene (321) des weiblichen Elements (32) und durch eine Einführung der Zapfen (312) des männlichen Elements (31) in die rohrförmigen Elemente (322) des weiblichen Elements (32) hergestellt wird.

9. Gehäuse nach Anspruch 1, **dadurch gekennzeichnet,**
- **dass** die Bodenplatten (111, 121, 131) des ersten, zweiten und dritten Teils (11, 12, 13) an ihrer jeweiligen Kante, die in Richtung einer benachbarten Bodenplatte (13, 11, 12) ausgerichtet ist, eine erste Linie (111.1; 121.1; 131.11, 131,21), eine zweite Linie (111.2; 121.2; 131.12, 131.22) und eine dritte Linie (111.3; 121.3; 131.13, 131.23) aufweisen,
- **dass** die zweite Linie (111.2; 121.2; 131.12, 131.22) in einem Winkel von etwa 90° zu der ersten Linie (111.1; 121.1; 131.11, 131.21) angeordnet ist, und
- **dass** die dritte Linie (111.3; 121.3; 131.13, 131.23) in einem Winkel von etwa 90° zu der zweiten Linie (111.2; 121.2; 131.12, 131.22) angeordnet ist.

## Claims

1. Housing for electronic devices and comprising a shell (1) and a cover (2) **characterised in that**
- the shell (1) comprises a first part (11) and a second part (12) or comprises a first part (11), a second part (12) and at least one third part (13), and
- the parts are connected to one another and in the connected state form the shell (1),
- the first part (11) and the second part (12) comprise respectively a base plate (111, 121) and three side walls (112), and
- the at least one third part (13) comprises a base plate (131) and two side walls (132) that lie opposite one another.

2. Housing according to claim 1, **characterised in that**
- the first part (11) and the second part (12) form end regions of the shell (1) and that the at least one third part (13) forms an intermediate region of the shell (1).

3. Housing according to any one of the preceding claims, **characterised in that**
- at least two third parts (13) are identical.

4. Housing according to any one of the preceding claims, **characterised in that**
- connecting elements (3) connect the first part (11), the second part (12) and the at least one third part (13) to one another so as to form the shell (1), and
- the connecting elements (3) are arranged on the first part (11), the second part (12) and on the at least one third part (13).

5. Housing according to claim 4, **characterised in that**
- the connecting elements (3) comprise male elements (31) and female elements (32), and
- the male elements (31) and the female elements (32) of the connecting elements (3) are configured in such a manner that they correspond to one another and in particular are latching elements that latch into one another.

6. Housing according to claim 5, **characterised in that**
- the male elements (31) comprise a wall (311) and pins (312).

7. Housing according to claim 5 or 6, **characterised in that**
- the female elements (32) comprise a rail (321) and tube-shaped elements (322).

8. Housing according to claim 6 and 7, **characterised in that**
- the connecting elements (3) are configured in such a manner that a connection of the connecting elements (3) is produced, in particular said connecting elements are latched, by means of inserting the wall (311) of the male element (31) into the rail (321) of the female element (32) and by means of inserting the pin (312) of the male element (31) into the tube-shaped elements (322) of the female element (32).

9. Housing according to claim 1, **characterised in that**
- the base plates (111, 121, 131) of the first, second and third part (11, 12, 13) comprise on their respective edge that is oriented in the direction of an adjacent base plate (13, 11, 12) a first line (111.1; 121.1; 131.11, 131.21), a second line (111.2; 121.2; 131.12, 131.22) and a third line (111.3; 121.3; 131.13, 131.23),
- the second line (111.2; 121.2; 131.12, 131.22) is arranged at an angle of approximately 90° with respect to the first line (111.1; 121.1; 131.11, 131.21) and
- the third line (111.3; 121.3; 131.13, 131.23) is arranged at an angle of approximately 90° with respect to the second line (111.2; 121.2; 131.12, 131.22).

## Revendications

1. Boîtier pour dispositifs électroniques, constitué par une coque (1) et par un cache (2),
**caractérisé en ce**
- **que** la coque (1) est constituée par une première partie (11) et par une seconde partie (12), ou par une première partie (11), par une deuxième partie (12) et par au moins une troisième partie (13), et
- **que** les parties sont reliées les unes aux autres et forment la coque (1) à l'état relié,
- **que** la première partie (11) et la deuxième partie (12) sont respectivement constituées par une plaque de fond (111, 121) et par trois parois latérales (112), et
- **que** l'au moins une troisième partie (13) est constituée par une plaque de fond (131) et par deux parois latérales (132) qui se font face.

2. Boîtier selon la revendication 1, **caractérisé en ce**
- **que** la première partie (11) et la deuxième partie (12) forment des zones d'extrémité de la coque (1) et que l'au moins une troisième partie (13) forme une zone intermédiaire de la coque (1).

3. Boîtier selon une des revendications précédentes, **caractérisé en ce**
- **qu'**au moins deux troisièmes parties (13) sont identiques.

4. Boîtier selon une des revendications précédentes, **caractérisé en ce**
- **que** des éléments de liaison (3) relient la première partie (11), la deuxième partie (12) et l'au moins une troisième partie (13) les unes aux autres pour former la coque (1), et
- **que** les éléments de liaison (3) sont disposés au niveau de la première partie (11), de la deuxième partie (12) et sur l'au moins une troisième partie (13).

5. Boîtier selon la revendication 4, **caractérisé en ce**
- **que** les éléments de liaison (3) sont constitués par des éléments mâles (31) et des éléments femelles (32), et
- **que** les éléments mâles (31) et les éléments femelles (32) des éléments de liaison (3) sont configurés en correspondance les uns avec les autres et sont en particulier des éléments d'encliquetage qui s'engagent les uns dans les autres.

6. Boîtier selon la revendication 5, **caractérisé en ce**
- **que** les éléments mâles (31) sont constitués par une paroi (311) et de tenons (312).

7. Boîtier selon la revendication 5 ou 6, **caractérisé en ce**
- **que** les éléments femelles (32) sont constitués par une glissière (321) et par des 'éléments tubulaires (322).

8. Boîtier selon la revendication 6 et 7, **caractérisé en ce**
- **que** les éléments de liaison (3) sont configurés de telle sorte qu'une liaison des éléments de liaison (3), en particulier leur encliquetage, est réalisée par une introduction de la paroi (311) de l'élément mâle (31) dans la glissière (321) de l'élément femelle (32) et par une introduction des tenons (312) de l'élément mâle (31) dans les éléments tubulaires (322) de l'élément femelle (32).

9. Boîtier selon la revendication 1, **caractérisé en ce**
- **que** les plaques de fond (111, 121, 131) de la première, deuxième et troisième partie (11, 12, 13) présentent, sur leur bord respectif qui est orienté en direction d'une plaque de fond adjacente (13, 11, 12), une première ligne (111.1 ; 121.1 ; 131.11, 131,21), une deuxième ligne (111.2 ; 121.2 ; 131.12, 131.22) et une troisième ligne (111.3 ; 121.3 ; 131.13, 131.23),
- **que** la deuxième ligne (111.2 ; 121.2 ; 131.12, 131.22) est disposée selon un angle d'environ 90° par rapport à la première ligne (111.1 ; 121.1 ; 131.11, 131.21), et
- **que** la troisième ligne (111.3 ; 121.3 ; 131.13, 131.23) est disposée selon un angle d'environ 90° par rapport à la deuxième ligne (111.2 ; 121.2 ; 131.12, 131.22).
